# EUROPEAN PATENT APPLICATION

(11) **EP 4 714 993 A1**
(43) Date of publication of application: **25.03.2026**
(21) Application number: 24202022.0
(22) Date of filing: 23.09.2024
(51) Int. Cl.: C08G 59/40, C08J 9/10, C08J 9/32, C08L 63/00, C09J 163/00

(54) **EXPANDABLE THERMOSETTING EPOXY RESIN COMPOSITION WITH IMPROVED DUCTILITY**

(71) Applicant: Sika Technology AG, 6340 Baar (CH)
(72) Inventor: MADAUS, Brandon, Madison Heights, 48071 (US)
(74) Representative: Sika Patent Attorneys

(57) **Abstract**

The present invention relates to a one-component thermosetting epoxy resin composition, comprising a) at least one epoxy resin A having on average more than one epoxide group per molecule; b) at least one latent hardener for epoxy resins; c) at least one physical or chemical blowing agent BA; d) at least one core-shell polymer D1; e) at least one cross linked acrylonitrile-butadiene copolymer and f) polyvinyl butyral. The epoxy resin adhesive is notable for the improved ductility and storage stability.

## Description

### Technical field

The present invention pertains to the field of thermally expandable thermosetting epoxy resin composition, in particular for the production of structural foams and a reinforcing element for hollow structures which comprise such a thermally expandable composition, a method for producing such reinforcing elements, their use for reinforcing a hollow structure and a method for reinforcing a hollow structure.

### Prior art

Thermosetting epoxy-based compositions are extensively used as structural adhesives across industries such as automotive, aerospace, and construction. Their widespread use is due to their outstanding mechanical strength, chemical resistance, and thermal stability. Once cured, these adhesives create highly crosslinked networks that deliver exceptional bonding properties and structural integrity.

In the automotive industry, expandable thermosetting epoxy-based structural adhesives play a crucial role in reinforcing vehicle structures, particularly within cavities such as pillars, rocker panels, and other enclosed spaces. These adhesives not only bond components together but also provide structural integrity, enhance crash performance, and reduce noise, vibration, and harshness (NVH) levels.

Expandable thermosetting epoxy-based adhesives are designed to expand when exposed to heat during the vehicle assembly process, filling gaps and bonding to the surrounding surfaces to form a rigid structure. The expansion is typically achieved through the incorporation of blowing agents that generate gas upon heating, causing the adhesive to foam and expand. Once expanded and cured, these adhesives form a strong and durable bond with excellent load-bearing capabilities.

A significant limitation of conventional thermosetting epoxy adhesives is their inherent brittleness, resulting from the high crosslink density that is characteristic of these materials. This brittleness manifests as low ductility, which can lead to premature failure of bonded joints under dynamic or impact loading conditions. In applications where the adhesive is subjected to mechanical stress, such as in automotive structures, the need for improved ductility becomes paramount. Ductility is the ability of a material to deform plastically under stress without fracturing, allowing it to absorb and dissipate energy. In the context of epoxy adhesives, enhanced ductility translates to greater resistance to crack initiation and propagation, improved impact resistance, and better performance under cyclic or dynamic loading. These properties are particularly important in the automotive industry, where adhesives are used in structural applications that must endure complex loading conditions, including vibrations, thermal expansion, and crash impacts.

However, the challenge lies in balancing the adhesive's rigidity with the need for ductility. A highly rigid adhesive might exhibit excellent strength but could be prone to brittle failure, which is undesirable in crash scenarios where energy absorption is critical. Ductility allows the adhesive to deform under stress, providing the necessary flexibility to absorb and dissipate impact energy, reducing the risk of catastrophic failure.

Various approaches have been explored in the prior art to address the issue of brittleness and to improve the ductility of thermosetting epoxy adhesives. One common method involves the incorporation of elastomeric toughening agents, such as carboxyl-terminated butadiene acrylonitrile (CTBN) or core-shell rubber particles, into the epoxy matrix. These toughening agents create a two-phase system that enhances the adhesive's ability to deform under stress. Another strategy includes the use of plasticizers or flexibilizers, which reduce the glass transition temperature (Tg) of the adhesive, thereby increasing its flexibility and ductility. Additionally, the development of hybrid adhesive formulations, which combine epoxy resins with other polymers, has shown promise in achieving a balance between strength and ductility.

To enhance the ductility of epoxy adhesives, particularly in structural applications, the use of impact modifiers is a well-established method. However, it is crucial to strategically incorporate these modifiers in the correct dosage to achieve an optimal balance between key properties such as ductility, storage stability, and adhesive strength. By carefully selecting and combining appropriate impact modifiers, the mechanical properties of epoxy adhesives can be tailored to meet the specific demands of various applications.

To meet the demanding requirements of modern vehicles, it is crucial that these adhesives exhibit enhanced properties such as increased ductility and elongation at break, which enable them to absorb and dissipate energy under mechanical stress without failing. Additionally, superior storage stability ensures that the adhesives maintain their performance characteristics over time, even under varying storage conditions. Effective management of stress within the adhesive layer is also essential to prevent residual stresses that could compromise joint integrity and longevity. Improvement in key properties such as ductility, elongation at break, storage stability, and stress resilience in thermally expandable thermosetting epoxy-based adhesives can lead to more reliable, flexible, and long-lasting bonds. This improvement plays a crucial role in boosting the safety, durability, and efficiency of automotive components and assemblies.

Despite the advancements, there remains a need for thermosetting epoxy-based adhesives that offer improved ductility without compromising other critical properties such as adhesive strength, mechanical strength, chemical resistance, thermal stability, uncured density, and long-term durability. Moreover, achieving such improvements while maintaining storage stability and processing ease is crucial for practical application in industrial settings. The present invention addresses these challenges by providing a thermosetting epoxy adhesive with significantly enhanced ductility, excellent storage stability, offering improved performance and reliability in demanding structural applications.

### Summary of the invention

It is an object of the present invention, therefore, to provide thermally expandable epoxy resin compositions with improved ductility, without compromising on other essential properties especially storage stability, uncured density, adhesive strength, and long term durability.

Surprisingly it has been found that these objectives can be achieved by the one-component thermosetting epoxy composition comprising a combination of three different impact modifiers as defined in Claim 1.

Further aspects of the invention are subjects of further independent claims. Particularly preferred embodiments of the invention are subjects of the dependent claims.

### Certain embodiments of the invention

The present invention therefore relates to a one-component thermosetting epoxy resin composition, comprising -
a) at least one epoxy resin **A** having on average more than one epoxide group per molecule;
b) at least one latent hardener for epoxy resins;
c) at least one physical and/or chemical blowing agent **BA**;
d) at least one core-shell polymer **D1** ;
e) at least one cross linked acrylonitrile-butadiene copolymer; and
f) polyvinyl butyral.

The epoxy resin composition is one-component, meaning that the constituents of the epoxy resin composition, more particularly the epoxy resin and the hardener, are present in one component, without curing taking place at usual ambient temperature or room temperature. It can therefore be handled in this form, whereas with two-component systems the components cannot be mixed until immediately prior to use.

The curing of the one-component epoxy resin composition is accomplished by heating, typically at a temperature of more than 70°C, preferably in the range from 100 to 220°C.

The prefix "poly" in expressions such as polyol or polyisocyanate denotes that the compound has two or more of the stated groups. A polyisocyanate, for example, is a compound having two or more isocyanate groups.

In the context of the present invention, the term "ductility" describes the adhesive's ability to undergo significant plastic deformation before breaking. It encompasses not only "elongation" but also the material's ability to absorb and dissipate energy during deformation. Ductility is a broaderterm that includes how well the adhesive can deform under various types of stresses (tensile, compressive, or shear) and still maintain its structural integrity. The relationship between elongation and ductility in an epoxy adhesive system is that both are indicators of the adhesive's flexibility and ability to handle stress. While elongation specifically measures how much the adhesive can stretch, ductility encompasses the overall ability of the adhesive to deform and absorb stress without failing. An adhesive with high elongation is often ductile, but ductility also considers other factors like energy absorption and deformation under different stress conditions. Thus, a highly ductile adhesive will typically exhibit good elongation, but elongation alone does not fully capture the adhesive's overall ductility.

In the context of the present invention, the term "impact modifier" refers to a specialized additive introduced into epoxy adhesives to enhance their toughness and ductility. These modifiers are designed to improve the material's resistance to impact and fracture by altering the mechanical properties of the epoxy matrix. By dispersing throughout the adhesive, impact modifiers help to absorb and dissipate energy, thereby reducing brittleness and increasing the durability and performance of the final product in demanding structural applications.

The expression "independently of one another" as used below means that in the same molecule, two or more identically denoted substituents may have identical or different meanings in accordance with the definition.

The dashed lines in the formulae in this document represent in each case the bond between the substituent in question and the associated remainder of the molecule.

Room temperature refers here to a temperature of 23°C, unless otherwise indicated.

Percentages herein refer to weight percent, unless otherwise indicated.

The term epoxy resin can be used to denote one epoxy resin or a combination of epoxy resins.

The term "modulus" refers to the modulus of elasticity or stiffness of the adhesive material. It measures the adhesive's ability to resist deformation under an applied stress within the elastic range, where the material will return to its original shape once the stress is removed. For structural adhesives, the modulus is a critical property because it affects the overall performance of the bonded joint. High modulus adhesives are stiffer and less prone to deformation. They are suitable for applications where the bonded joint needs to maintain its shape under load, providing high structural integrity. Low modulus adhesives are more flexible and can absorb more deformation. They are ideal for applications where the bonded materials may experience differential movement or thermal expansion, as they can accommodate more strain without failing. They are used in applications requiring vibration damping, flexibility, or bonding of dissimilar materials with different coefficients of thermal expansion.

The term "storage stable" refers to the ability of the adhesive composition to maintain its desired properties and performance characteristics over a prolonged period of storage before use. This means that the adhesive composition can be stored for an extended time without undergoing significant chemical changes, such as premature curing, viscosity changes, separation, or degradation, which could compromise its effectiveness when eventually applied.

In the context of a compression test for adhesives, "**strain**" refers to the deformation or change in shape that occurs in the adhesive material when it is subjected to compressive forces. Strain in a compression test is the relative change in length (or height) of the adhesive material when it is compressed. It is calculated as the ratio of the change in length to the original length of the adhesive specimen.

The term "yield stress" refers to the minimum stress that must be applied to a material for it to begin to deform plastically. In the context of structural adhesives, "yield stress" refers to the stress at which the adhesive material begins to flow or deform permanently under an applied load. Structural adhesives are used to bond materials together, and their yield stress is an important property that determines how well they can resist shear forces and maintain their bond strength under stress. When the applied stress exceeds the yield stress of the adhesive, the material begins to deform plastically, which can compromise the integrity of the bond between the adhered surfaces. This property is critical for ensuring that the adhesive can sustain the loads applied to the bonded structure without failing or undergoing permanent deformation. Yield stress in structural adhesives is particularly important in applications where the bonded components are subject to dynamic or cyclic loading, as it indicates the adhesive's ability to maintain its structural performance over time.

### Epoxy Resin:

The one-component thermosetting epoxy resin composition comprises at least one epoxy resin **A** having on average more than one epoxide group per molecule. The epoxide group is preferably in the form of a glycidyl ether group.

Preferably, the fraction of the epoxy resin **A** having on average more than one epoxide group per molecule is from 30 - 90 wt.-%, 35 - 85 wt.-%, 40 - 75 wt.-%, more preferably 50 - 65 wt.-%, based on the total weight of the one-component thermosetting epoxy resin composition.

The epoxy resin **A** having on average more than one epoxide group per molecule is preferably a liquid epoxy resin or a solid epoxy resin, more preferably a solid epoxy resin. The term "solid epoxy resin" is very familiar to the person skilled in the epoxide art and is used in contrast to "liquid epoxy resins". The glass transition temperature of solid resins is above room temperature, meaning that at room temperature they can be comminuted into pourable powders. It is preferred if more than 70 wt.-%, more preferred more than 80 wt.-%, more than 90 wt.-%, more than 95 wt.-%, more than 98 wt.-%, of the epoxy resin **A** is a solid epoxy resin.

Preferred epoxy resins have the formula (I)

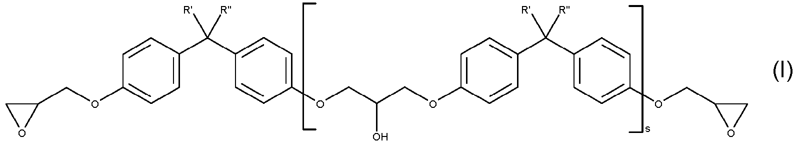

In this formula, the substituents R' and R" independently of one another are either H or CH₃.

In solid epoxy resins, the index s has a value of > 1.5, more particularly from 2 to 12.

Solid epoxy resins of this kind are available commercially, for example, from Dow or Huntsman or Hexion.

Compounds of the formula (I) having an index s of 1 to 1.5 are referred to by the person skilled in the art as semi-solid epoxy resins. For the purposes of the present invention, they are considered likewise to be solid resins. Preferred solid epoxy resins, however, are epoxy resins in the narrower sense, in other words where the index s has a value of > 1.5.

In the case of liquid epoxy resins, the index s has a value of less than 1. Preferably s has a value of less than 0.2.

The resins in question are therefore preferably diglycidyl ethers of bisphenol A (DGEBA), of bisphenol F and also of bisphenol A/F. Liquid resins of these kinds are available for example as Araldite^{®} GY 250, Araldite^{®} PY 304, Araldite^{®} GY 282 (Huntsman) or D.E.R. ^{™} 331 or D.E.R. ^{™} 330 (Dow) or Epikote 828 (Hexion).

Of further suitability as epoxy resin **A** are what are called epoxy novolacs. These compounds have, in particular, the following formula: 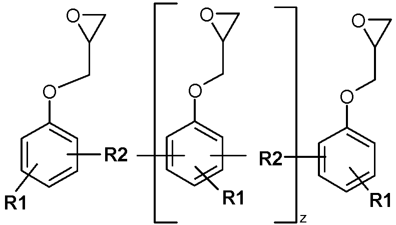 where **R2** = 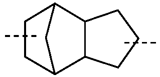 or CH₂, **R1** = H or methyl and z = 0 to 7.

More particularly these are phenol-epoxy or cresol-epoxy novolacs (**R2** = CH₂).

Epoxy resins of these kinds are available commercially under the tradename EPN or ECN and also Tactix^{®} from Huntsman, or within the product series D.E.N.^{™} from Dow Chemical.

Preferably, the epoxy resin **A** is a solid epoxy resin. More preferably, the epoxy resin **A** is a solid epoxy resin of the formula (I).

### Latent Hardener

The one-component thermosetting epoxy resin composition further comprises at least one latent hardener for epoxy resins. Latent hardeners are substantially inert at room temperature and are activated by elevated temperature, typically at temperatures of 70°C or more, thereby initiating the curing reaction. The customary latent hardeners for epoxy resins can be used. Preference is given to a latent epoxy resin hardener containing nitrogen.

Preferably, the latent hardener is selected from dicyandiamide, guanamines, guanidines, aminoguanidines and derivatives thereof, substituted ureas, imidazoles and amine complexes, preferably dicyandiamide.

The latent hardener is preferably used in a stoichiometric amount based on the epoxy groups in the composition. The molar ratio of the epoxy groups to the active hydrogen of the latent hardener is preferably 0.8 to 1.2, in particular 0.9 to 1.1, preferably 0.95 to 1.05.

The fraction of the latent hardener is preferably 0.1 to 15 wt%, more preferably 0.2 to 5 wt%, more particularly 0.5 - 3 wt%, based on the total weight of the epoxy resin composition.

### Blowing Agents:

The one-component thermosetting epoxy resin composition comprises at least one physical and/or chemical blowing agent **BA**.

Chemical blowing agents are organic or inorganic substances which, under the influence of temperature, humidity, electromagnetic radiation or chemicals, form or split off gaseous substances. Such substances are in particular azo-dicarbonamides, sulfohydrazides, hydrogen carbonates or carbonates. Compounds can be used as physical blowing agents which, for example when the temperature, pressure or volume changes, in particular when the temperature rises, change to the gaseous state of matter and thus form a foam structure through volume expansion. Such physical blowing agents are in particular liquids which evaporate at elevated temperature. Furthermore, gases or low-boiling liquids can be used as physical blowing agents, which are introduced into the composition in microencapsulated form. Both chemical and physical blowing agents are able to produce foam structures in polymer compositions.

Preferred physical blowing agents are expandable microspheres, consisting of a thermoplastic shell which is filled with thermally expandable liquids or gases. Such microspheres are commercially available, for example, under the trade name Expancel^{®} from Akzo Nobel, the Netherlands.

The at least one physical or chemical blowing agent **BA** preferably has an activation temperature from 120 °C to 220 ° C., preferably from 140 ° C to 200 ° C.

Preferably, the blowing agent **BA** is a physical or chemical blowing agent preferably selected from p,p'-Oxybisbenzolsulfonylhydrazide and dry powder of unexpanded thermoplastic microspheres.

The proportion of the blowing agent **BA** is advantageously 0.1-7.5 % by weight, preferably 0.5-5 % by weight, in particular 1-4 % by weight, based on the total weight of the epoxy resin composition.

### Core Shell polymer D1

The one-component thermosetting epoxy resin composition comprises at least one core-shell polymer **D1**. The core-shell polymers **D1** preferably have a rubbery core. The rubbery core preferably has a Tg of less than -20°C, more preferably less than -50°C and even more preferably less than -70°C. Preferably, the Tg value (glass transition temperature) is determined with a Dynamic Mechanical Thermal Analyzer (DMTA).

Further, the core-shell polymer also preferably has at least one shell portion that preferably has a Tg of at least 50°C.

By "core", it is meant an internal portion of the core-shell polymer. The core may form the center of the core-shell polymer, or an internal shell or domain of the core-shell polymer.

A shell is a portion of the core-shell polymer that is exterior to the rubbery core. The shell portion (or portions) typically forms the outermost portion of the core-shell polymer. The shell material is preferably grafted onto the core or is crosslinked or both. The rubbery core may constitute from 50 to 95%, especially from 60 to 90%, of the weight of the core-shell polymer.

The core of the core-shell polymer may be a polymer or copolymer of a conjugated diene such as butadiene, or a lower alkyl acrylate such as n-butyl-, ethyl-, isobutyl- or 2- ethylhexylacrylate. The core polymer may in addition contain up to 20% by weight of other copolymerized monounsaturated monomers such as styrene, vinyl acetate, vinyl chloride, methyl methacrylate, and the like. The core polymer is optionally crosslinked. The core polymer optionally contains up to 5% of a copolymerized graft-linking monomer having two or more sites of unsaturation of unequal reactivity, such as diallyl maleate, monoallyl fumarate, allyl methacrylate, and the like, at least one of the reactive sites being non-conjugated.

The shell polymer, which is optionally chemically grafted or crosslinked to the rubber core, is preferably polymerized from at least one lower alkyl methacrylate such as methyl-, ethyl- or t-butyl methacrylate. Homopolymers of such methacrylate monomers can be used. Further, up to 40% by weight of the shell polymer can be formed from other monovinylidene monomers such as styrene, vinyl acetate, vinyl chloride, methyl acrylate, ethyl acrylate, butyl acrylate, and the like. The molecular weight of the grafted shell polymer is generally between 20,000 and 500,000.

The core-shell polymer may have a number average particle size of at 10 to 300 nanometers, especially 75 to 250 nanometers, as determined by transmission electron spectroscopy.

A preferred type of core-shell polymer has reactive groups in the shell polymer which can react with an epoxy resin or an epoxy resin hardener. Glycidyl groups such as are provided by monomers such as glycidyl methacrylate are suitable.

Preferably, the core-shell polymer **D1** is characterized by one or more of the following-
a) the shell material is grafted onto the core or is crosslinked or both; and/or
b) core-shell polymer has a number average particle size of 10 to 300 nanometers, preferably 75 to 250 nanometers, as determined by transmission electron spectroscopy.

Preferably, the core of core-shell polymer **D1** is characterized by one or more of the following-
a) the core is rubbery preferably having a Tg of less than -20°C, more preferably less than -50°C and even more preferably less than -70°C;
b) the core constitutes from 50 to 95%, preferably from 60 to 90%, of the weight of the core-shell polymer; and/or
c) the core includes a crosslinked rubber, preferably a crosslinked copolymer of butadiene.

Preferably, the shell of core-shell polymer **D1** is characterized by one or more of the following-
a) the shell portion preferably has a Tg of at least 50°C; and/or
b) the shell is preferably a copolymer of styrene, methyl methacrylate, glycidyl methacrylate and optionally acrylonitrile.

A particularly preferred type of core-shell polymer is of the type described in EP 1 632 533 A1. Core-shell rubber particles as described in EP 1 632 533 A1 include a crosslinked rubber core, in most cases being a crosslinked copolymer of butadiene, and a shell which is preferably a copolymer of styrene, methyl methacrylate, glycidyl methacrylate and optionally acrylonitrile. The core-shell rubber is preferably dispersed in a polymer or an epoxy resin, also as described in EP 1 632 533 A1.

The core-shell polymer may be provided in the form of a dispersion of the particles in an epoxy resin. Such a dispersion may contain, for example, 10 to 50 weight percent of the core-shell polymer, with the remainder being the epoxy resin. The epoxy resin in such a dispersion is preferably a polyglycidyl polyphenol ether as described above. Such dispersions include commercially available products such as Kane Ace^{™} MX-150, MX-154, MX-257, MX-134, MX-135, MX-136, MX-139, MX-267, MX-215, MX- 217, MX-236 and MX-451, all from Kaneka Americas.

Preferably, the core-shell polymer **D1** is pre-dispersed in an epoxy resin preferably bisphenol A polyglycidyl ether in 10 to 50 weight percent, the remainder being the epoxy resin.

When the core-shell polymer is provided in the form of such a dispersion, only the weight of the core-shell polymer is counted toward the core-shell polymer of this invention. The weight of the epoxy resin and that of the polyglycidyl polyphenol ethers in such a dispersion is counted toward the corresponding components of this invention.

### Cross linked acrylonitrile-butadiene copolymer

The one-component thermosetting epoxy resin composition comprises at least one cross linked acrylonitrile-butadiene copolymer.

The cross-linked acrylonitrile-butadiene copolymer refers to a chemically modified version of acrylonitrile-butadiene rubber (NBR) where the polymer chains are connected or "cross-linked" through covalent bonds. This crosslinking process may alter the material's properties, enhancing its performance for specific applications.

Acrylonitrile-butadiene copolymer is preferably crosslinked using a polyfunctional co-monomer. The term "polyfunctional" means that the co-monomer has multiple reactive sites that can form bonds with the polymer chains. A particularly prefered polyfunctional monomer is "divinyl benzene". It has two vinyl groups that can react with the copolymer, forming crosslinks. This crosslinking process generally improves the mechanical properties and stability.

Preferably, the acrylonitrile-butadiene copolymer is crosslinked by the use of a polyfunctional co-monomer preferably divinyl benzene.

In preferred embodiments of the present invention, the cross-linked acrylonitrile-butadiene rubber is non-functionalized. In particular, the polymer or copolymer does not contain any functional groups such as active hydrogen groups (e.g., hydroxyl groups, amino groups, carboxylic acid groups) or epoxy groups.

Preferably, the acrylonitrile-butadiene copolymer contains from 25 to 40 weight % polymerized acrylonitrile.

Preferably, the cross-linked acrylonitrile-butadiene copolymer is incorporated into the claimed composition of the present invention in finely divided, particulate form.

In a preferred embodiment of the invention the cross linked acrylonitrile-butadiene copolymers fine particle have an average particle size of 25 to 250 µm, preferably 50 to 200 µm. It is particularly preferred that the average particle size of the cross linked acrylonitrile-butadiene copolymers fine particles is in the range of 75 to 175 µm. Preferably the average particle size is determined by transmission electron spectroscopy.

Suitable examples of commercially available cross-linked acrylonitrile-butadiene copolymers include the **Hycar^{®} CTBN** series from Emerald Performance Materials, **Paracril^{®}** from Omnova Solutions, **Krynac^{®}** from Arlanxeo, **Nipol^{®}** from Zeon Chemicals. Particularly, prefered cross linked acrylonitrile-butadiene copolymer includes NIPOL 1411, an acrylonitrile-butadiene copolymer rubber (ca. 38 wt. % acrylonitrile; Zeon Chemicals). Nipol 1411 is a copolymer of butadiene and high acrylonitrile, furnished as a fine powder.

### Polyvinyl butyral

The one-component thermosetting epoxy resin composition comprises polyvinyl butyral. Polyvinyl butyral (PVB) is a versatile thermoplastic resin that is widely recognized for its adhesive properties, flexibility, and optical clarity. Polyvinyl butyral PVB can be crosslinked with thermoset resins to improve adhesion, film toughness, flexibility, and impact resistance. In the context of the present invention, Polyvinyl butyral (PVB) is primarily used as an impact modifier (or toughening agent).

Polyvinyl butyral (PVB) is considered to be an acetal and is formed from the reaction of an aldehyde and alcohol. Polyvinyl butyral (PVB) is preferably synthesized through the acetalization of polyvinyl alcohol with butyraldehyde.

Preferably, the polyvinyl butyral has 12-16 wt% polyvinyl alcohol and 1-4 wt%. polyvinyl acetate.

The Polyvinyl butyral (PVB) may have dynamic viscosity of 100-300 mPas, preferably 120-280 mPas (10% ethanol) Hoeppler method (20°C).

Polyvinyl butyral (PVB) resins may have an average degree of polymerization of 500 to 1000 and a degree of buyration of 57 to 70 mole percent. Specific examples of suitable polyvinyl butyral resins include the MOWITAL@ line of polyvinyl butyral resins commercially available from Kuraray America, Inc. A particularly preferred Polyvinyl butyral (PVB) resins used in the present invention is polyvinyl butyral Mowital B 60 HH, which has relatively large molecular weight.

The polyvinyl butyral (PVB) resin is preferably provided in the form of white spherical porous particles or powder. More preferably, PVB is provided in the form of fine-grained and free-flowing white powder.

Preferably, the polyvinyl butyral (PVB) resin has specific gravity 1:1 and its filling density is only 0.20 ~ 0.35g/ml. The glass transition temperature (TG) of polyvinyl butyral (PVB) preferably ranges from 50°C to 90°C.

Polyvinyl butyral (PVB) is compatible with various resins, including phenolic, epoxy, alkyd, and melamine resins. In particular, Polyvinyl butyral (PVB) exhibits excellent compatibility with epoxy resins, it is beleived that it reacts to prevent brittle fractures and enhance impact resistance.

The total amount of the Polyvinyl butyral (PVB) is advantageously 0.5-10 weight-%, preferably 1-4 weight-%, based on the total weight of the epoxy resin composition.

### Filler Component

In one preferred embodiment, the one-component thermosetting epoxy resin composition further comprises at least one filler **F**. Preference here is given to mica, talc, kaolin, wollastonite, feldspar, syenite, chlorite, bentonite, montmorillonite, calcium carbonate (precipitated or ground), dolomite, quartz, silicas (fumed or precipitated), cristobalite, calcium oxide, aluminium hydroxide, magnesium oxide, hollow ceramic beads, hollow glass beads, hollow organic beads, glass beads, glass or carbon fibres and colour pigments. Particularly preferred are fillers selected from the group consisting of calcium carbonate, calcium oxide, talc, glass or carbon fibres and fumed silicas, more preferably talc, glass or carbon fibres and fumed silicas.

The total fraction of the overall filler **F** is advantageously 5-50 weight-%, preferably 15-40 weight-%, 20-35 weight-%, based on the total weight of the epoxy resin composition.

The one-component thermosetting epoxy resin composition may comprise further constituents, especially catalysts, thixotropic agents, plasticizers, solvents, dyes and pigments, corrosion inhibitors, surfactants, defoamers and adhesion promoters.

A particularly preferred one-component thermosetting epoxy resin composition comprises:
a) 30 - 90 wt.-%, 35 - 85 wt%, 40 -75 wt.-%, more preferably 50 - 65 wt.-%, of the least one epoxy resin **A** having on average more than one epoxide group per molecule;
b) 0.1 to 15 wt.-%, more preferably 0.2 to 5 wt.-%, more particularly 0.5 - 3 wt.-%, of the at least one latent hardener for epoxy resins, more particularly dicyandiamide;
c) 0.1-7.5% by weight, preferably 0.5-5% by weight, in particular 1-4 % by weight, of the blowing agent **BA**;
d) 2-8 wt-%, preferably 3-7 wt-% of the core shell polymer;
e) 2 - 8 wt.-% of the cross-linked acrylonitrile-butadiene copolymer; and
f) 1 - 5 wt.-% of polyvinyl butyral;
based on the total weight of the one-component thermosetting epoxy resin composition.

In a further preferred embodiment, one-component thermosetting epoxy resin composition comprises 5-40 weight-%, preferably 20-40 weight-%, based on the total weight of the epoxy resin composition, of a filler **F** selected from the group consisting of calcium carbonate, calcium oxide, talc, glass fibres and fumed silicas, more preferably talc, glass fibres and fumed silicas.

The one-component thermosetting epoxy resin composition is preferably tack-free at 23 ° C. The term "tack-free" is understood here to mean immediate tack or "tack", which is so low at 23 ° C that when pressed with a thumb with a pressure of about 5 kg for 1 second on the surface of the one-component thermosetting epoxy resin composition, the thumb does not stick to the surface of the composition layer or the one-component thermosetting epoxy resin composition cannot be raised.

The one-component thermosetting epoxy resin composition can also contain one or more additives. Examples of additives which can be used are processing aids such as waxes, antioxidants, UV stabilizers, dyes, biocides or flame retardants.

The proportion of processing aid is advantageously 1 to 8% by weight, preferably 2 to 5% by weight, based on the total weight of the composition.

Preferably, the one-component thermosetting epoxy resin composition has a melt flow index (MFI) of 0.5-15 g / 10 min, in particular 1-10 g / 10 min, preferably 3-9 g / 10 min, most preferably 3-7 g / 10 min, determined according to ISO 1133 (100° C/2.16 kg).

The melt flow index (MFI) is a critical parameter as it indicates the material's flowability under heat and pressure. By carefully selecting the MFI within these specified ranges, the resin's performance can be optimized for specific applications, ensuring that it flows appropriately during processing while maintaining the necessary mechanical properties after curing.

The one-component thermosetting epoxy resin composition is preferably an injection moldable mixture, i.e. the mixture has a viscosity suitable for injection molding at the processing temperatures. It is particularly injection-moldable without foaming.

In yet another aspect, the present invention relates to the use of the one-component thermosetting epoxy resin composition according to the present invention as an adhesive.

Preferably, the one-component thermosetting epoxy resin composition exhibits one or more of the following properties:
a) retains on average more than 40, preferably more than 80% of its yield stress at 30% strain in the compression test;
b) expands or foams between about 100-350%, preferably between about 200-250% at temperature of 180°C (30 min).

The one-component thermosetting epoxy resin composition of the present invention is particularly designed to maintain its structural integrity and performance under significant stress and high temperatures, making it suitable for demanding applications. In particular, the composition of the present invention exhibit high yield stress retention and excellent foaming capabilities. The composition retains, on average, more than 40%, and preferably more than 80%, of its yield stress when subjected to a 30% strain in a compression test. This indicates that even when compressed by 30%, the composition remains strong and continues to resist deformation, ensuring that it holds the bonded materials together effectively under mechanical stress.

The composition can expand or foam significantly, between about 100-350%, and preferably between about 200-250%, when exposed to a temperature of 180°C for 30 minutes. This expansion behavior is particularly valuable in applications where the composition needs to fill gaps, create seals, or provide cushioning. The ability to foam ensures that the composition can adapt to irregular surfaces and enhance the bonding or sealing effect by increasing its volume, which also contributes to improved energy absorption and thermal insulation.

The surprsing effect of the present invention are observed by using a specific combination or blend of three different impact modifiers (i.e. a crosslinked acrylonitrile butadiene, a core shell particle predispersed in epoxy resin and polyvinyl butyral) in a one component epoxy resin composition. The three different impact modifiers in combination meet the target of at least 80% of the yield stress at 30% strain in compression and are storage stable.

The core of the invention is to use a combination of a core shell modifier, a cross linked acrylonitrile-butadiene copolymer and polyvinyl butyral to achieve a greater than 80% of the yield stress at 30% strain in the compression test of an adhesive.

In yet another aspect, the present invention relates to a reinforcement element comprising the one-component thermosetting epoxy resin composition according to the present invention, in particular for reinforcement in the cavities of structural components, preferably in bodies and / or frames of means of transport and transportation.

The one-component thermosetting epoxy resin composition is preferably applied or attached to a carrier part.

This carrier part can consist of any materials. Preferred materials are plastics, in particular polyurethanes, polyamides, polyesters and polyolefins, preferably high-temperature-resistant polymers such as poly (phenylene ethers), polysulfones or polyethersulfones, which in particular are also foamed; Metals, especially aluminum and steel; or any combination of these materials.

Furthermore, the carrier part can have any structure and structure. For example, it can be solid or hollow or have a lattice-like structure. The surface of the carrier part can typically be smooth, rough or structured. The carrier part can also contribute to the structural reinforcement in addition to its function as a carrier for the foamable material.

It is also possible that reinforcing elements have no carrier part and consist entirely of the one-component thermosetting epoxy resin composition.

The reinforcement elements comprising a carrier part and the one-component heat-curing epoxy resin composition are preferably produced by injection molding.

If the carrier part consists of a material that can be processed by injection molding, a two-component injection molding process is usually used. First, a first component, in this case the carrier part, is injected. After this first component has solidified, the cavity in the mold is enlarged or adapted, or the molded part is placed in a new mold, and a second component, in this case the epoxy resin composition, is molded onto the first component with a second injection unit. If the carrier part consists of a material that cannot be produced by the injection molding process, for example of a metal, the carrier part is placed in an appropriate tool and the epoxy resin composition is injection molded onto the carrier part.

Of course, there is also the possibility of fastening the epoxy resin composition to a carrier part by any other fastening means or method.

For the reinforcing elements mentioned, it is further advantageous if the epoxy resin composition can be foamed and cured thermally, at a temperature from 120 °C to 220 ° C., preferably from 140 ° C to 200 ° C, preferably within a time period at said temperature of 10 to 60 min.

Furthermore, the invention comprises the use of a reinforcing element, as described above, for reinforcing cavities in structural components. Structural components of this type are preferably used in bodies and / or frames of means of transport and transportation, in particular of vehicles on water or on land or of aircraft. The invention preferably includes the use of a reinforcing element according to the invention in bodies or frames of automobiles (in particular A, B, C or D pillars) trucks, railroad cars, boats, ships, helicopters and airplanes, mostly preferably in automobiles.

A further aspect of the present invention therefore relates to a method for reinforcing structural components comprising the steps
i) placing a reinforcement element according to the previous description in a cavity of a structural component, preferably in bodies and / or frames of means of transport and transportation;
ii) heating the reinforcement element to a temperature from 120 °C to 220 °C, preferably from 140 °C to 200 °C, preferably for 10 to 60 min.

Preferably, step i) takes place before step ii).

The invention is elucidated further in the text below by means of examples which, however, are not intended to restrict the invention in any way.

### Examples

Raw materials and test methods used for the testing of the respective properties in the examples were as follows:

| | |
|---|---|
| Solid epoxy resin 1 | Solid epoxy resin, bisphenol A diglycidyl ether based, Dow |
| Solid epoxy resin 2 | Solid epoxy resin, cresol-epoxy novolac |
| Core-shell | Kane Ace MX-182, 28% Core Shell Rubber in Bisphenol-A based solid epoxy resin, Kaneka (~ 28% of core shell rubber dispersed in solid epoxy resin) |
| Polyvinyl butyral | Mowital B 60 HH, content of polyvinyl alcohol: 12-16 wt.-%. |
| | Mowital B 60 HH is a specific grade of PVB resin, known for its high molecular weight and viscosity. |
| Cross linked acrylonitrile-butadiene copolymer | Nipol 1411 from Nippon Zeon, a copolymer of butadiene and high acrylonitrile, furnished as a very fine powder with an average particle size that is in the range between 75 to 175 µm. |
| Glass fiber | Chopped glass fibers |
| Talc | Clay mineral composed of hydrated magnesium silicate |
| Dicy | Dicyandiamide |
| Substituted urea | Accelerator |
| Blowing agent 1 | p,p'-Oxybisbenzolsulfonylhydrazide (OBSH) |
| Blowing agent 2 | Dry powder of unexpanded thermoplastic microspheres, Expancel |

Raw materials used

### Preparation of the compositions

According to the information in Table 1, the compositions E-1 and E-2 according to the invention were produced. The amounts in Table 1 are in weight-%.

The raw materials used were mixed with a Brabender mixer (C.W. Brabender Prep-mixer model RS7500) for 20 min @ 90 °C. The produced compositions were then compressed into 3-4 mm thick sheets with a heated hydraulic press at 80 °C. Such sheets were then subsequently cut into desirable dimensions for evaluation testing.

The following measurements were carried out on the test specimens obtained:

### MFI determination

The melt flow index (MFI) was determined according to ISO 1133 (190° C./2.16 kg). Thus, the melt flow index (MFI) of the polymer composition was determined in accordance with ISO 1133, which specifies the procedure for measuring the flow properties of thermoplastics by extrusion plastometer. The test was conducted at a temperature of 190°C under a load of 2.16 kg. This method provides a measure of the ease of flow of the molten polymer, reflecting the molecular weight and processing characteristics of the material. The resulting MFI value is an essential parameter for understanding the suitability of the polymer composition for various processing techniques, such as injection molding, extrusion, and blow molding, and ensuring consistent performance in end-use applications.

### Determination of foam density / volume expansion (expansion)

As mentioned before, directly after production, the compositions were compressed into 3-4 mm thick sheets. Such sheets were cut into plagues of 25 mm x 25 mm. These plagues were ether quantified directly after production (initial) or after being placed into a humidity chamber at 40 °C / 50% humidity setting for 5 days (after 5 days @ 40°C).

Volume expansions were quantified for each sample by measuring the density before and after expansion. The densities were determined according to DIN EN ISO 1183 using the water immersion method (Archimedes principle) in deionized water and a precision balance to measure the mass. Expansion was determined by subjecting the specimen to an oven bake for 30 min @ 180 °C.

Volume expansions were quantified directly after production of the compositions (initial) and after mentioned placement into a humidity chamber at 40 °C / 50% humidity setting for 5 days (after 5 days @ 40°C).

Before expansion, all the compositions E-1 and E-2 were tack-free at 23 ° C according to the definition described above.

### Adhesion (LSS) determination

The adhesion strength was determined based on SAE J1523. Oil coated HDG plates (25 mm wide, 100mm long and 1.5 mm thick) were used. Composition material with 25 x 25 x 3mm in dimension was placed in between. After clamping the test pieces in place, the test specimen were baked @ 171 °C for 20 min. A tensile tester (Zwick) was used at a speed of 12 mm/min.

### Compression strength expanded material determination

To determine the compression strength properties, the uncured material was brought into a cylindrical tube lined with release paper with an inside diameter of 30 +/- 2 mm in accordance with ASTM D1621 and cured for 30 minutes after the material reached 180°C. After the bake was complete, the material was sanded until the remaining test piece was 30mm in diameter x 60mm in height. After a conditioning time of 24 hours at 23°C, the cylinder was placed between 2 compression plates and the test was started at a speed of 5 mm / min to 30% strain. Compression strength was recorded.

| | | | **E-1** | **E-2** |
|---|---|---|---|---|
| Solid epoxy resin 1 | | [%] | 52 | 44 |
| Solid epoxy resin 2 | | [%] | 2 | 2 |
| Core-shell | | [%] | 10.7 | 21.4 |
| Polyvinyl butyral | | [%] | 2 | 2 |
| Cross linked acrylonitrile-butadiene copolymer | | [%] | 5 | 5 |
| Glass fiber | | [%] | 12 | 12 |
| Talc | | [%] | 12.6 | 9.9 |
| Dicy | | [%] | 1.2 | 1.2 |
| Substituted urea | | [%] | 0.7 | 0.7 |
| Blowing agent 1 | | [%] | 0.7 | 0.7 |
| Blowing agent 2 | | [%] | 1.1 | 1.1 |
| TOTAL (wt.-%) | | [%] | 100 | 100 |
| | | | | |
| MFI | | g/10min | 6.4 | 6.7 |
| Expansion 20'@171°C, initial | | [%] | 156 | 191 |
| Expansion 30'@180°C, initial | | [%] | 219 | 222 |
| Expansion 40'@205°C, initial | | [%] | 239 | 220 |
| Expansion 30'@180°C, after 5 days @ 40°C | | [%] | 195 | 200 |
| Difference 30'@180°C (5 days @ 40°C / initial) | | | -11% | -10% |
| Adhesion LLS (171 °C) | | MPa | 3.1 | 2.8 |

| **Compression strength expanded material** | | | | |
|---|---|---|---|---|
| | Stress (171 °C) | MPa | 12.6 | 10.3 |
| | Modulus (171 °C) | MPa | 501 | 449 |
| | Ductility (171 °C) | [%] | 44 | 82 |

The values in the above Table, depicts that a one component, latent cured, epoxy based adhesive that exhibits sufficient ductility, specifically in the compression test is obtained. The inventive adhesive compositions of the present invention retain on average more than 40, preferably more than 80% of its yield stress at 30% strain in the compression test. E-2 is preferred over E-1 since the value is 82%.

The inventive compositions are storage stable (i.e. show lesser decrease in expansion), especially after storage for 5 days at 40°C 50% humidity. The values depicted for "Difference 30'@180°C (5 days @ 40°C / initial)" for E-2 and E1 are 10% and 11% respectively. Thus, storage stability of the inventive compositions is excellent.

## Claims

1. One-component thermosetting epoxy resin composition, comprising-
a) at least one epoxy resin **A** having on average more than one epoxide group per molecule;
b) at least one latent hardener for epoxy resins;
c) at least one physical and/or chemical blowing agent **BA**;
d) at least one core-shell polymer **D1**;
e) at least one cross linked acrylonitrile-butadiene copolymer; and
f) polyvinyl butyral.

2. The one-component thermosetting epoxy resin composition according to Claim 1, wherein the fraction of the epoxy resin **A** having on average more than one epoxide group per molecule is from 30 - 90 wt.-%, 35 - 85 wt.-%, 40 -75 wt.-%, more preferably 45 - 60 wt.-%, based on the total weight of the one-component thermosetting epoxy resin composition.

3. The one-component thermosetting epoxy resin composition according to any of the preceding claims, wherein the epoxy resin **A** is a solid epoxy resin.

4. The one-component thermosetting epoxy resin composition according to any of the preceding claims, wherein the latent hardener is selected from dicyandiamide, guanamines, guanidines, aminoguanidines and derivatives thereof, substituted ureas, imidazoles and amine complexes, preferably dicyandiamide.

5. The one-component thermosetting epoxy resin composition according to any of the preceding claims, wherein the blowing agent **BA** is a physical or chemical blowing agent preferably selected from p,p'-Oxybisbenzolsulfonylhydrazide and dry powder of unexpanded thermoplastic microspheres.

6. The thermosetting epoxy resin composition according to any of the preceding claims, wherein core-shell polymer **D1** is pre-dispersed in an epoxy resin preferably bisphenol A polyglycidyl ether in 10 to 50 weight percent, the remainder being the epoxy resin.

7. The one-component thermosetting epoxy resin composition according to any of the preceding claims, wherein the core-shell polymer **D1** is **characterized by** one or more of the following-
a) the shell material is grafted onto the core or is cross-linked or both; and/or
b) core-shell polymer has a number average particle size of 10 to 300 nanometers, preferably 75 to 250 nanometers, as determined by transmission electron spectroscopy.

8. The one-component thermosetting epoxy resin composition according to any of the preceding claims, wherein the core of core-shell polymer **D1** is **characterized by** one or more of the following-
a) the core is rubbery preferably having a Tg of less than -20°C, more preferably less than -50°C and even more preferably less than -70°C;
b) the core constitutes from 50 to 95%, preferably from 60 to 90%, of the weight of the core-shell polymer; and/or
c) the core includes a cross-linked rubber, preferably a cross-linked copolymer of butadiene.

9. The one-component thermosetting epoxy resin composition according to any of the preceding claims, wherein the shell of core-shell polymer **D1** is **characterized by** one or more of the following-
a) the shell portion preferably has a Tg of at least 50°C; and/or
b) the shell is preferably a copolymer of styrene, methyl methacrylate, glycidyl methacrylate and optionally acrylonitrile.

10. The one-component thermosetting epoxy resin composition according to any of the preceding claims, wherein the acrylonitrile-butadiene copolymer is cross-linked by the use of a polyfunctional co-monomer preferably divinyl benzene.

11. The one-component thermosetting epoxy resin composition according to any of the preceding claims, wherein the acrylonitrile-butadiene copolymer contains from 25 to 40 weight % polymerized acrylonitrile.

12. The one-component thermosetting epoxy resin composition according to any of the preceding claims, wherein the polyvinyl butyral has 12-16 wt% polyvinyl alcohol and 1-4 wt%. polyvinyl acetate.

13. The one-component thermosetting epoxy resin composition according to any of the preceding claims, wherein the one-component thermosetting epoxy resin composition comprises:
a) 30 - 90 wt.-%, 35 - 85 wt%, 40 -75 wt.-%, more preferably 50 - 65 wt.-%, of the least one epoxy resin **A** having on average more than one epoxide group per molecule;
b) 0.1 to 15 wt.-%, more preferably 0.2 to 5 wt.-%, more particularly 0.5 - 3 wt.-%, of the at least one latent hardener for epoxy resins, more particularly dicyandiamide;
c) 0.1-7.5% by weight, preferably 0.5-5% by weight, in particular 1-4 % by weight, of the blowing agent **BA**;
d) 2-8 wt-%, preferably 3-7 wt-% of the core shell polymer;
e) 2 - 8 wt.-% of the cross-linked acrylonitrile-butadiene copolymer; and
f) 1 - 5 wt.-% of polyvinyl butyral;
based on the total weight of the one-component thermosetting epoxy resin composition.

14. The one-component thermosetting epoxy resin composition according to any of the preceding claims, wherein the one-component thermosetting epoxy resin composition further comprises at least one filler **F**, selected from the group consisting of calcium carbonate, calcium oxide, talc, glass fibres and fumed silicas, more preferably talc, glass fibres and fumed silicas.

15. The one-component thermosetting epoxy resin composition according to any of the preceding claims, wherein the one-component thermosetting epoxy resin composition has a melt flow index (MFI) of 0.5-15 g / 10 min, in particular 1-10 g / 10 min, preferably 3-9 g / 10 min, most preferably 3-7 g / 10 min, determined according to ISO 1133 (100° C/2.16 kg).

16. The one-component thermosetting epoxy resin composition according to any of the preceding claims exhibiting one or more of the following properties:
a) retains on average more than 40, preferably more than 80% of its yield stress at 30% strain in the compression test described in the description;
b) expands or foams between about 100-350%, preferably between about 200-250% at temperature of 180°C for 30 min.

17. A reinforcement element comprising the one-component thermosetting epoxy resin composition according to any of the preceding claims, in particular for reinforcement in the cavities of structural components, preferably in bodies and / or frames of means of transport and transportation.

18. A method for reinforcing structural components comprising the steps
i) placing a reinforcement element according to claim 17 in a cavity of a structural component, preferably in bodies and / or frames of means of transport and transportation;
ii) heating the reinforcement element to a temperature from 120 °C to 220 °C, preferably from 140 °C to 200 °C, preferably for 10 to 60 min.
